# DEMANDE DE BREVET EUROPEEN

(11) **EP 2 031 548 A1**
(43) Date de publication de la demande: **04.03.2009**
(21) Numéro de dépôt: 07301326.0
(22) Date de dépôt: 27.08.2007
(51) Int. Cl.: G06K 19/073

(54) **Procédé et dispositif comportemental, destinés à prévenir l'utilisation d'un objet portable sans contact à l'insu de son porteur**

(71) Demandeur: GEMPLUS, 13420 Gémenos (FR)
(72) Inventeur: Boursier, Carine, 13400 Aubagne (FR); Girard, Pierre, 13112 La Destrousse (FR)

(57) **Abrégé**

L'invention concerne un procédé et un dispositif destinés à prévenir l'établissement d'une communication radiofréquence (13) entre un objet portable (11) sans contact un autre objet sans contact si l'utilisateur de l'objet portable sans contact ne fait pas varier l'état d'au moins un capteur (14) embarqué sur l'objet portable sans contact d'une manière convenue, et dans des proportions convenues.
Un des buts de l'invention est de prévenir l'utilisation de l'objet portable sans contact à l'insu de son porteur.

## Description

L'invention concerne un procédé et un dispositif comportemental, destinés à prévenir l'utilisation d'un objet portable sans contact à l'insu de son porteur.

L'invention porte en particulier sur un procédé et un dispositif destinés à prévenir l'établissement de la communication (radiofréquence) entre un premier objet portable sans contact et un second objet sans contact, à l'insu du porteur de cet objet portable.

Certains objets portables sans contact, tels que les cartes à puce, fonctionnent par télé-alimentation. Ces supports tirent l'énergie nécessaire à leur fonctionnement d'un champ électromagnétique produit et envoyé par le lecteur de carte avec lequel ils doivent dialoguer. De surcroît, ce champ électromagnétique véhicule les données échangées entre la carte et le lecteur au cours d'une communication dite radiofréquence. Ce champ électromagnétique est donc nécessaire et suffisant à la fois pour l'alimentation de la carte à puce et pour l'établissement d'une communication entre le lecteur et la carte.

Dans tous les cas, les objets portables sans contact fonctionnent sans lien ni contact physique avec l'objet sans contact qui fait office de lecteur. Ces deux objets peuvent donc ne pas être en vue directe l'un de l'autre.

La conséquence de cette situation est qu'il est possible d'interroger un objet portable sans contact sans que son porteur (en général son propriétaire) ne s'en rende compte et/ou ne soit consentant à cette interrogation, ce qui ouvre la voie à un nouveau type d'attaque sur les objets portables sans contact.

Cette problématique expose les objets portables sans contact à deux attaques majeures :
- l'atteinte à la vie privée
- la fraude.

L'atteinte à la vie privée se rencontre principalement dans l'univers de l'identité électronique. En effet, une activation de l'objet portable sans contact (par exemple une carte d'identité électronique) à l'insu de son propriétaire permet à la personne malveillante d'obtenir tout ou partie des informations contenues dans ce passeport.

La fraude consiste à faire réaliser une transaction à l'objet portable électronique à l'insu de son propriétaire. Par exemple une signature électronique ou une authentification, voire un paiement.

En particulier, il est envisageable d'utiliser un objet portable sans contact (par exemple une carte) à l'insu de son propriétaire en augmentant la distance entre un lecteur et cette carte au moyen de relais formant un pont de communication entre la carte et le lecteur.

Par exemple, si une personne est en possession d'une carte de paiement sans contact, l'attaquant va profiter de la proximité d'une station de métro, pour essayer de lui faire payer une transaction à son insu. Pour cela, il pourra approcher de la carte un objet qui fera office de lecteur du point de vue de la carte (par exemple un agenda électronique personnel (PDA) modifié). A distance, un autre attaquant approchera du lecteur officiel (capable de valider la transaction de paiement), un objet qui fera office de carte du point de vue du lecteur (un agenda électronique personnel (PDA) modifié par exemple).

Ainsi, en établissant une communication entre les deux PDA (par liaison Bluetooth, WIFI ou Internet par exemple), il est possible de transmettre au lecteur les véritables communications issues de la carte, et à la carte les véritables communications issues du lecteur. Ainsi, malgré une grande distance pouvant séparer les deux objets, une paire d'attaquants peut réaliser une transaction à l'insu du porteur de la carte.

Ces problèmes peuvent éventuellement être résolus par la mise en oeuvre de solutions existantes.

Dans la suite de la présente description, on se placera dans un contexte particulier des objets portables sans contact, à savoir celui des cartes à puce sans contact. L'objet sans contact communicant avec les cartes en question sera nommé par l'appellation générique de « lecteur ». Ces précisions doivent être vues comme un exemple, et ne restreignent en aucun cas la portée de la présente invention qui reste applicable à l'ensemble des objets portables pouvant communiquer sans contact tels que passeports, les agendas électroniques, les téléphones sans fil, etc.

Pour résoudre les problèmes décrits plus haut, il a déjà été proposé de bloquer l'utilisation d'une carte sans contact tant que son utilisateur n'appuie pas sur un bouton poussoir équipant cette carte.

Cette solution s'est avérée très difficile à mettre en oeuvre en conservant les contraintes ISO telle que définies dans les normes, par exemple les normes ISO 7816-1 et ISO 7816-2.

De plus cette solution, outre de forts coûts de fabrication, génère une forte altération de la fiabilité du bouton poussoir au fil du temps.

Il a également été proposé de prévenir toute utilisation intempestive de la carte en glissant cette dernière dans un étui métallique, le métal ayant la propriété de bloquer les ondes électromagnétiques.

Cette solution a comme inconvénients majeurs les contraintes qu'elle engendre pour l'utilisateur. En effet, l'usage de la carte par son porteur légitime ne peut se faire que si celui-ci extrait la carte de son étui. Cette contrainte va à l'encontre de la philosophie du « Tap and Go ». En effet, le « Tap and Go » est un principe voulant qu'une transaction puisse s'intégrer dans un mouvement naturel et fluide du porteur. L'idée sous-jacente est de ne pas obliger l'utilisateur à attendre.

Cet objectif est atteint grâce à des transactions très rapide, par exemple dans le domaine des transports, la transaction doit se réaliser en moins de 250 millisecondes. De plus, la transaction doit se faire en mode sans contact afin que l'utilisateur puisse utiliser sa carte à travers un porte-carte, un sac ou une poche, mais surtout que l'utilisateur n'ai pas à insérer sa carte dans un lecteur.

Ainsi, devoir sortir la carte d'un étui clos, et la re-enfermer par la suite, oblige l'utilisateur à « interrompre » son mouvement, ce qui est en désaccord avec ce principe.

Il a également été proposé d'obliger l'utilisateur d'une carte sans contact à présenter un élément d'identification supplémentaire sur le lecteur, tel qu'un code secret, pour valider la transaction entre la carte et le lecteur. Un exemple est le cas de certains passeports qui sont lus par un lecteur sans contact, puis qui nécessitent, sur le clavier du lecteur, la saisie d'un numéro de série présent sur le corps du passeport. Ici encore, nous sommes en contradiction avec le principe du « Tap and Go ». Qui plus est, un contact physique entre l'utilisateur et le lecteur est ici nécessaire pour la saisie de l'information en question, ce qui rapproche cette solution de celle des cartes à contact et diminue de ce fait l'intérêt des transactions sans contact.

Dans ce contexte, la présente invention propose une solution alternative, solutionnant les inconvénients cités précédemment et présentant des avantages propres.

L'invention concerne un procédé et un dispositif destiné à prévenir l'établissement d'une communication radio-fréquence entre un objet portable sans contact et un autre objet sans contact si l'utilisateur du premier objet portable sans contact ne fait pas varier l'état d' au moins un capteur embarqué sur l'objet portable sans contact d'une manière convenue, et dans des proportions convenues.

Nous utiliserons, dans la présente description et dans les revendications qui suivent, le terme de « état » pour désigner une ou plusieurs valeurs physiques mesurables par un ou des capteurs présents sur ou dans le corps de carte. Ainsi l'état d'un objet peut désigner sa position dans l'espace, et par voie de conséquence son déplacement, sa température, sa structure physique (torsion), ou toute autre valeur mesurable.

De même nous utiliserons le terme de « comportement » pour désigner une variation mesurable de l'état d'un objet. Nous préciserons ce terme en parlant de « comportement volontaire » pour désigner une variation de l'état d'un objet due à une action positive de la part de son porteur.

De manière plus précise, l'invention revendiquée propose un procédé destiné à prévenir l'établissement de la communication radio-fréquence d'un premier objet portable sans contact avec un second objet sans contact, à l'insu du porteur du premier objet portable, ce procédé comprenant les étapes de :
- capture, qui consiste en la capture d'une variation de l'état de l'objet portable, dite comportement,
- vérification, qui consiste en la vérification de la capture à la vue d'une valeur de référence du comportement, stockée dans une mémoire de l'objet portable, et la production d'un indice de similitude
- décision, qui consiste en la décision d'autoriser ou non l'établissement de la communication si l'indice de similitude produit lors de l'étape de vérification atteint un seuil d'acceptation.

Ainsi l'invention permet de vérifier que, lors de l'établissement d'une communication radio-fréquence impliquant un objet portable, le porteur de cet objet est consentant.

Pour cela, il faut définir un comportement que devra reproduire le porteur pour prouver son assentiment.

Dans un mode simple de mise en oeuvre de l'invention, l'objet portable pourra contenir un simple capteur de position relevant si l'objet est en position verticale ou horizontale.

Le comportement attendu peut être par exemple un « passage en position verticale ». Donc toute variation du capteur se stabilisant en position verticale sera un comportement considéré comme attendu.

Le fait de mesurer une variation d'état et non pas uniquement un état permet d'éviter le cas où l'objet est dans un état correct par accident. En effet, si on se contentait de regarder la position de l'objet dans l'espace, si l'objet est horizontal (car posé sur une table par exemple), il accepterait toutes les communications sans l'aval de son possesseur.

Au lieu de rechercher la position de l'objet dans l'espace, un mode de réalisation consiste en une analyse des mouvements subits par l'objet. Dans ce cas là, il faut que l'objet soit équipé de capteurs adaptés, et que l'objet réalise un mouvement déterminé pour permettre l'établissement de la communication. Dans ce cas là, il sera préférable de choisir un mouvement relativement complexe afin d'éviter qu'il ne se fasse par accident.

De la même manière, il est possible de mesurer la température de l'objet. Par exemple si l'objet portable est une carte à puce, le fait de la tenir implique naturellement une pression du pouce à sa surface. Ainsi, au point de contact du doigt, la température va varier pour s'approcher de la température corporelle du doigt. Si l'objet comporte un capteur de température bien calibré, une variation de la température de la surface de l'objet (tendant par exemple vers une stabilisation autour de 35 degrés Celsius) peut être un bon indice de certitude que le porteur tient la carte en main est qu'il est consentant à réaliser une transaction avec sa carte. Dans un mode amélioré de réalisation, le corps de l'objet pourra comporter plusieurs capteurs de température, et ainsi le comportement attendu peut être une variation tendant vers une stabilisation autour de 35 degrés Celsius, mais seulement d'une zone précise de la surface.

Un autre mode de réalisation peut se baser sur une torsion de tout ou partie du corps de l'objet portable. Dans ce cas là, il faudra que le corps, ou tout au moins une zone déterminée comporte un ou plusieurs capteurs capables de détecter une torsion. Le comportement attendu pourrait par exemple être une torsion d'un angle déterminé, dans un sens déterminé.

Quel que soit la ou les valeurs choisies pour constituer le comportement, il est indispensable d'avoir une valeur de référence de ce comportement, afin de pouvoir comparer le comportement candidat.

Dans un mode simple de mise en oeuvre de l'invention, ce comportement de référence peut être enregistré à l'avance, et stocké. Toutefois, il est envisageable, dans une autre mise en oeuvre de l'invention que ce comportement de référence ne soit pas enregistré, mais calculé. Par exemple, à chaque utilisation, un écran va décrire un comportement à adopter, et vérifier sa validité. Il est envisageable par exemple, si l'objet portable est un agenda électronique, que lors de la sollicitation de celui-ci pour une communication radiofréquence, l'écran décrive un série de mouvements à reproduire. En présence d'un écran tactile, on peut envisager que l'écran affiche un tracé à suivre pour autoriser la transaction.

Maintenant que nous avons un comportement candidat, et un comportement de référence, il est nécessaire de les comparer. Les méthodes de comparaison dépendent des valeurs qui composent les comportements. Par exemple, concernant des mouvements, il est possible de mesurer les positions de l'objet, sa vitesse, l'amplitude des mouvements, etc...

Une fois que les critères sont définis, l'objet va produire un indice de similitude, représentant la « qualité » du comportement candidat vis-à-vis du comportement de référence.

Si cet indice atteint un seuil alors la communication sera autorisée.

Dans un autre mode de réalisation, le seuil d'acceptation peut ne pas être prédéfini, mais calculé. Dans ce cas-là, lors de la tentative de connexion du lecteur, la carte va appliquer une fonction de calcul. Cette fonction pourra par exemple prendre en compte des informations issues de la tentative de connexion. Par exemple, la fonction pourra tenir compte de l'intensité du signal, de son amplitude, des informations éventuellement émises dans la tentative de connexion.

Ainsi, pour une tentative de connexion avec un signal particulièrement faible ou très fluctuant, ce qui peut faire penser à des conditions propices à la fraude, le seuil pourra être très élevé, alors que lors d'une tentative de connexion avec un signal fort, stable, le seuil d'acceptation pourrait être plus faible.

Un avantage supplémentaire de l'invention est que le comportement attendu par la carte peut être secret. Dans ce cas-là, l'invention fournit un niveau de sécurité plus élevé. En effet, selon la complexité retenue du comportement, l'invention permet de recréer, en mode sans contact, un système proche de celui du code d'identification (dit PIN code) couramment utilisé en mode contact.

Un autre avantage de l'invention est la possibilité de combiner les comportements, et ainsi d'augmenter encore le niveau de sécurité.

Un autre avantage de l'invention est de pouvoir adapter le comportement à l'utilisateur. En effet, selon les utilisateurs, il sera possible d'adapter le comportement de référence afin qu'il soit le moins gênant possible.

Par exemple, dans le cas de capteur de mouvement, un mouvement naturel chez une personne de quinze ans, est très différent d'un mouvement naturel chez une personne de quatre vingt cinq ans.

Dans le cas particulier d'une combinaison de capteurs, nous pouvons envisager que certains utilisateurs utilisent une catégorie de capteurs (de mouvement par exemple), et d'autres utilisateurs une autre catégorie (de pression par exemple).

D'autres caractéristiques et avantages de l'invention ressortiront clairement de la description qui en est faite ci-après, à titre indicatif et nullement limitatif, en référence aux dessins annexés dans lesquels :
- La figure 1 représente un système dans lequel un objet portable sans contact est capable de percevoir une variation de son état ;
- La figure 2 représente un organigramme de la mise en oeuvre du procédé selon l'invention ;

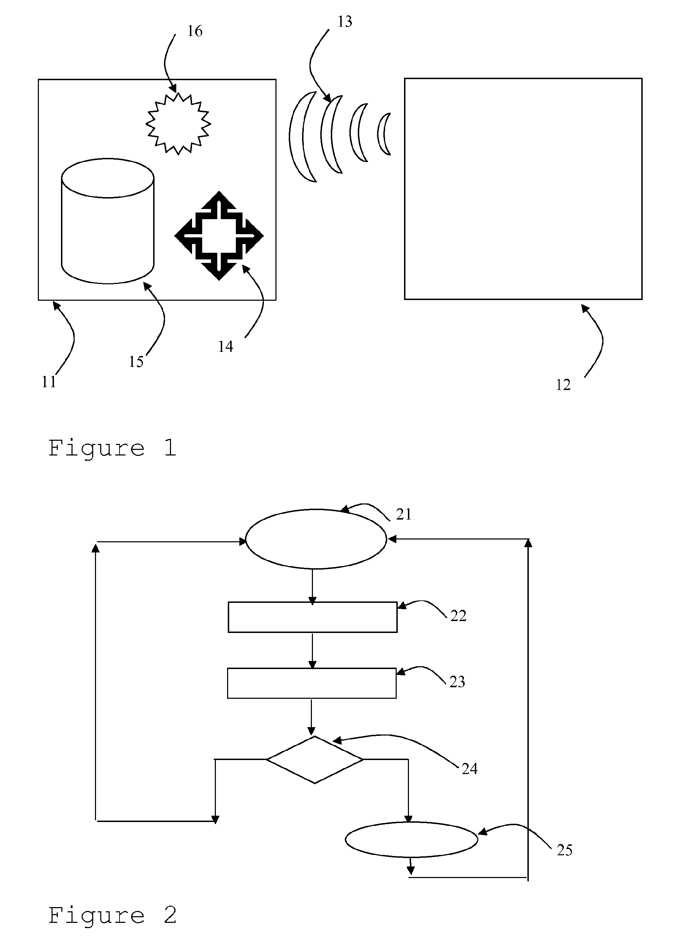

La figure 1 montre un objet portable sans contact 11 comportant un capteur 14, une mémoire 15 et un processeur 16.

Cette figure montre en outre un objet sans contact 12 qui sera plus précisément décrit par la suite.

Ces deux objets peuvent communiquer par ondes radiofréquence 13.

Le capteur 14 de l'objet sans contact 11 est capable de mesurer une variation de l'état de l'objet 11. Cette variation est appelée dans la présente description comportement.

Lors d'une éventuelle sollicitation par l'objet sans contact 12, l'objet sans contact 11 n'acceptera d'établir une connexion 13, que si le processeur 16 considère que la valeur relevée par le capteur, et la valeur de référence stockée dans la mémoire 15 sont suffisamment similaire.

Dans un exemple de mise en oeuvre de l'invention, l'objet portable sans contact est une carte d'identité électronique, et cette carte se trouve dans la poche d'une veste, dans un sac à main, ou dans un portefeuille. De plus, la carte comporte plusieurs accéléromètres/inclinomètres, formant le capteur 14. Le comportement de référence enregistré dans la mémoire 15 est un déplacement horizontal de la carte de gauche à droite, suivi immédiatement d'un déplacement horizontal de la carte de droite à gauche. Le seuil d'acceptation est calibré à une valeur S. Dans notre exemple, la fonction de comparaison de comportement prend en compte les angles relevés par les capteurs, l'amplitude des mouvements, la vitesse moyenne et les vitesses instantanées à des moments précis.

Ainsi, si la carte est sollicitée par un lecteur à l'insu de son propriétaire (dans les transports en commun par exemple), alors les capteurs 14 s'activent, et analysent les mouvements et la position de la carte. Il est particulièrement improbable que la carte réalise naturellement, et à ce moment là, le mouvement décrit plus haut. Donc le processeur va comparer les relevés des capteurs avec la référence. Le processeur ne va pas retrouver la position horizontale de la carte, et seul le mouvement gauche-droite sera relevé, pas le mouvement droite-gauche. L'étape de vérification produit dans notre exemple, un indice de similitude IS1.

L'étape de décision va comparer cet indice de similitude IS1 avec le seuil prédéfini S. Dans notre exemple le seuil n'étant pas atteint, le processeur ne va pas autoriser l'établissement de la communication avec le lecteur.

Toujours dans notre exemple, lors d'une utilisation volontaire de la carte, le propriétaire approche la carte d'un lecteur, ce qui a pour effet d'activer celle ci, et donc les capteurs 14.

A ce moment-là, l'utilisateur va reproduire le comportement convenu, à savoir un déplacement horizontal de la carte de gauche à droite, suivi immédiatement d'un déplacement horizontal de la carte de droite à gauche.

Le processeur va comparer les relevés des capteurs avec la référence, et établir un indice de similitude. Dans le cas de notre exemple, les capteurs ont bien reconnu la position horizontale de la carte, et les déplacements successifs gauche-droite et droite-gauche. L'étape de vérification produit, dans notre exemple, un indice de similitude IS2.

L'étape de décision va comparer cet indice de similitude avec le seuil prédéfini S. Le seuil étant atteint, le processeur va autoriser l'établissement de la communication avec le lecteur.

La figure 2 représente un organigramme de la mise en oeuvre, dans l'objet portable sans contact, du procédé selon l'invention.

Cette figure présente une étape de repos 21, une étape de capture 22 d'une information externe, une étape de vérification 23, une étape de décision 24 en fonction du résultat de la vérification, et une étape 25 de réalisation d'une communication radiofréquence.

Lors de la réception d'une tentative de communication radiofréquence, l'objet portable va sortir de l'état de repos 21 pour entrer dans un état 22, état dans lequel il va capturer, via un capteur embarqué, une variation d'état appelée comportement. Ce comportement peut être un mouvement, une position, une torsion, ou toute autre information susceptible d'être mesurée sur un objet portable, et que l'utilisateur peut faire varier volontairement. Dans un cas particulier de mise en oeuvre de l'invention, cette étape de capture peut avoir une durée définie, ou alors prendre fin lorsque le ou les capteurs ont relevé une quantité minimale d'information. Une fois cette étape de capture réalisée, l'objet portable va passer dans un état 23, état pendant lequel il va comparer les informations relevées par le capteur, avec une valeur de référence. Le résultat de cette comparaison sera appelé indice de similitude. Dans un mode de réalisation préféré de l'invention, cet indice de similitude est un pourcentage. Une fois cet indice de similitude produit, l'objet portable va passer dans à une étape 24 dite étape de décision. Lors de cette étape, l'objet portable va vérifier si l'indice de similitude atteint un seuil S. Si le seuil est atteint, alors l'objet portable passe dans l'état 25. Dans cet état, l'objet portable va accepter la communication radiofréquence, et réaliser la transaction demandée normalement.

En revanche, si lors de l'étape 24, la valeur de l'indice de similitude n'atteint pas le seuil S, cela signifie que l'objet portable ne se trouve pas dans les conditions de fonctionnement prévues. On peut alors émettre l'hypothèse que la carte est activée à l'insu de son porteur. Dans ce cas là, la communication radiofréquence peut être refusée, et l'objet se replace dans l'état d'attente 21.

Dans une implémentation particulière de l'invention, après détection d'une activation supposée à l'insu du propriétaire, la carte pourra prendre une ou plusieurs décisions, par exemple :
- elle pourra enregistrer cette tentative.
- elle pourra décider d'accepter la communication, mais selon un mode volontairement protégé. Par exemple en n'émettant que très peu d'informations, et aucunement confidentielles, ou en n'émettant que des informations erronées.
- elle pourra décider d'effacer tout ou partie des informations qu'elle contient.
- ou toute autre réaction.

## Revendications

1. Procédé destiné à prévenir l'établissement de la communication radio fréquence (13) d'un premier objet portable (11) sans contact avec un second objet sans contact (12), à l'insu du porteur dudit premier objet portable (11),
**caractérisé en ce qu'**il comprend les étapes de
- capture, capture d'une variation de l'état dudit premier objet portable, dite comportement
- vérification, vérification de ladite capture à la vue d'une valeur de référence dudit comportement stockée dans une mémoire (15) dudit premier objet portable (11), et production d'un indice de similitude
- décision, décision d'autoriser ou non l'établissement de ladite communication (13) si l'indice de similitude produit lors de l'étape de vérification atteint un seuil d'acceptation S.

2. Procédé selon la revendication 1, **caractérisé en ce que** ledit comportement est au moins une position prédéfinie dans l'espace.

3. Procédé selon la revendication 1, **caractérisé en ce que** ledit comportement est au moins un mouvement.

4. Procédé selon la revendication 1, **caractérisé en ce que** ledit comportement est au moins une variation de température.

5. Procédé selon la revendication 1, **caractérisé en ce que** ledit comportement est au moins une torsion.

6. Procédé selon l'une des revendications 1 à 5, **caractérisé en ce que** le seuil d'acceptation S est prédéfini et stocké dans la mémoire de l'objet portable sans contact.

7. Procédé selon l'une des revendications 1 à 5, **caractérisé en ce que** le seuil d'acceptation S est calculé.

8. Procédé selon l'une des revendications précédentes, **caractérisé en ce que** ledit premier objet portable (11) est une carte à puce sans contact.

9. Objet portable sans contact (11) apte à communiquer par communication radio-fréquence (13) avec un second objet sans contact (12), **caractérisé en ce qu'**il comprend au moins un capteur (14) d'une variation de l'état dudit premier objet portable, dite comportement, et **en ce qu'**il comprend un processeur (16) qui autorise l'établissement de ladite communication radio-fréquence (13) lorsque la similitude entre ledit comportement capturé par ledit capteur (14) et un comportement de référence stocké dans une mémoire (15) dudit premier objet portable (11), atteint un seuil.

10. Objet portable selon la revendication 9, **caractérisé en ce que** ledit capteur (14) est un capteur de mouvement.

11. Objet portable selon la revendication 9, **caractérisé en ce que** ledit capteur (14) est un capteur de température.

12. Objet portable selon la revendication 9, **caractérisé en ce que** ledit capteur (14) est un capteur de torsion.

13. Objet portable selon l'une des revendications 9 à 12, **caractérisé en ce que** ledit premier objet portable sans contact (11) est une carte à puce sans contact.
